# EUROPÄISCHE PATENTSCHRIFT

(11) **EP 1 207 648 B1**
(45) Veröffentlichungstag und Bekanntmachung des Hinweises auf die Patenterteilung: **10.05.2006**
(21) Anmeldenummer: 01122226.2
(22) Anmeldetag: 17.09.2001
(51) Int. Cl.: H04L 1/20, H04L 1/24

(54) **Anordnung zum Messen der Bitfehlerrate und/oder Blockfehlerrate eines Mobiltelefons**
Arrangement for measuring the bit error rate and/or block error rate of a mobile phone
Arrangement de mesure du taux d'erreurs sur les bits et/ou du taux d'erreur de bloc d'un téléphone mobile

(30) Priorität: 17.11.2000 DE 10057088; 22.12.2000 DE 10065937
(43) Veröffentlichungstag der Anmeldung: 22.05.2002
(73) Patentinhaber: Rohde & Schwarz GmbH & Co. KG, 81671 München (DE)
(72) Erfinder: Plaumann, Ralf, 85659 Preisendorf (DE); Winkelhofer, Max, 80809 München (DE)
(74) Vertreter: Körfer, Thomas

(56) Entgegenhaltungen:
- WO-A-99/48237
- WO-A-99/63764

## Beschreibung

Die Erfindung betrifft eine Anordnung zum Messen der Bitfehlerrate und/oder der Blockfehlerrate eines Mobiltelefons gemäß Oberbegriff des Hauptanspruches.

Die sog. Bitfehlerrate bzw. Blockfehlerrate ist bei modernen Mobiltelefonen eine wichtige Kenngröße. Für Mobiltelefone Nach GSM-Norm (GSM_04.14) ist für die Messung der Bitfehlerrate ein spezielles Testmodekommando (GPRS_Test_Mode_CMD) definiert. Es ist auch eine Anordnung zum Ausführen dieses Meßverfahrens bekannt (WO 99/63764) und das Mobiltelefon besitzt dazu einschaltbare verbindungsschleifen, über welche der Ausgang des Demodulators unmittelbar mit dem Eingang des Modulators und/oder der Ausgang des Kanaldecoders unmittelbar mit dem Eingang des Kanalcodierers des Mobiltelefons verbunden werden kann. Das eigentliche Meßgerät ist während der Messung vom Mobiltelefon abgesetzt und steht mit letzterem über die normale Hochfrequenz-Verbindungsstrecke in Verbindung. Zum Messen der Bitfehlerrate sendet das Meßgerät eine übliche Anmeldung zum Mobiltelefon und anschließend wird dann durch übliche Signalisierung zwischen Meßgerät und Mobiltelefon eine Datenverbindung aufgebaut. Dann wird über das Meßgerät eine der Verbindungsschleifen im Mobiltelefon eingeschaltet. Schließlich kann dann vom Meßgerät zum Mobiltelefon eine Testsignal-Datenbitfolge übertragen werden, die dann dort demoduliert und decodiert und schließlich wieder nach erneuter Codierung und Modulation zum Meßgerät zurückübertragen wird. Im Meßgerät wird diese rückübertragene Testsignal-Datenbitfolge mit der ursprünglich vom Meßgerät zum Mobiltelefon übertragenen Testsignal-Datenbitfolge verglichen und daraus kann dann schließlich die Bitfehlerrate berechnet werden. Ein Nachteil dieser bekannten Meßanordnung ist der relativ große Signalisierungsaufwand, der vor der eigentlichen Messung für den Verbindungsaufbau zwischen Meßgerät und Mobiltelefon durchgeführt werden muß und der sehr zeitaufwendig ist, so daß die gesamte Messung unverhältnismäßig viel Zeit kostet.

Es ist Aufgabe der Erfindung, eine Meßanordnung aufzuzeigen, mit dem die Bitfehlerrate bzw. Blockfehlerrate eines Mobiltelefons wesentlich schneller gemessen werden kann.

Diese Aufgabe wird ausgehend von einer Meßanordnung laut Oberbegriff des Hauptanspruches durch dessen kennzeichnende Merkmale gelöst. Vorteilhafte Weiterbildungen ergeben sich aus den Unteransprüchen.

Gemäß der Erfindung ist für die Messung keine vorhergehende Signalisierung zwischen Meßgerät und zu messenden Mobiltelefon erforderlich, die RLC/MAC-Einheit des Mobiltelefons wird für die Messung nicht aktiviert. Dadurch wird erhebliche Zeit gespart. Gemäß der Erfindung wird das zu messende Mobiltelefon direkt beispielsweise über Kabel mit dem Meßgerät verbunden und nach normaler BCCH-Synchronisation wird vom Meßgerät das entsprechend der Übertragungsnorm des zu messenden Mobiltelefons codierte Testsignal, das eine beliebige Datenbitfolge aufweist, in das Mobiltelefon eingespeist und von dort aus dann wieder zum Meßgerät zurückübertragen, so daß durch einen Vergleich mit dem ursprünglich vom Meßgerät gesendeten Testsignal Bitfehler festgestellt werden können, die im Demodulator bzw. Decoder des Mobiltelefons entstehen. Gleichzeitig ist auf diese Weise auch eine einfache Messung der sog. Blockfehlerrate möglich, indem beim Vergleich im Meßgerät festgestellt wird, welche rückübertragenen Radio-Blöcke gegenüber den ursprünglichen Radio-Blöcken des Testsignals fehlerhaft sind.

Diese daraus ableitbare Blockfehlerrate ist zwar nicht exakt gleich mit der nach der GSM-Norm 11.10-1, Kapitel 14.16 (GPRS) und 14.18 (EGPRS) definierten Blockfehlerrate, da bei der erfindungsgemäßen Anordnung nicht die Fehler im Header der Radio-Blöcke gemessen werden, sondern nur die Fehler des Datenteils der Radio-Blöcke. Der Zusammenhang zwischen der auch die Header der Radio-Blöcke berücksichtigenden Blockfehlerrate und der diese Header nicht berücksichtigenden sog. Datenblockfehlerrate kann für die jeweiligen Codierverfahren und verwendeten Datenraten bestimmt werden und ist somit bekannt. Damit kann aus dieser sog. Daten-Blockfehlerrate die eigentliche Blockfehlerrate nach der GSM-Norm berechnet werden. Für die Ausführung des erfindungsgemäßen Verfahrens ist es im übrigen nur erforderlich, daß am zum messenden Mobiltelefon über das dort vorgesehene Testinterface die erwähnten Verbindungsschleifen, die bei bisherigen Mobiltelefonen nur über die eigentliche Signalisierung aktivierbar sind, vom Benutzer zu Testzwecken eingeschaltet werden.

Die Erfindung wird im Folgenden anhand schematischer Zeichnungen an einem Ausführungsbeispiel näher erläutert.

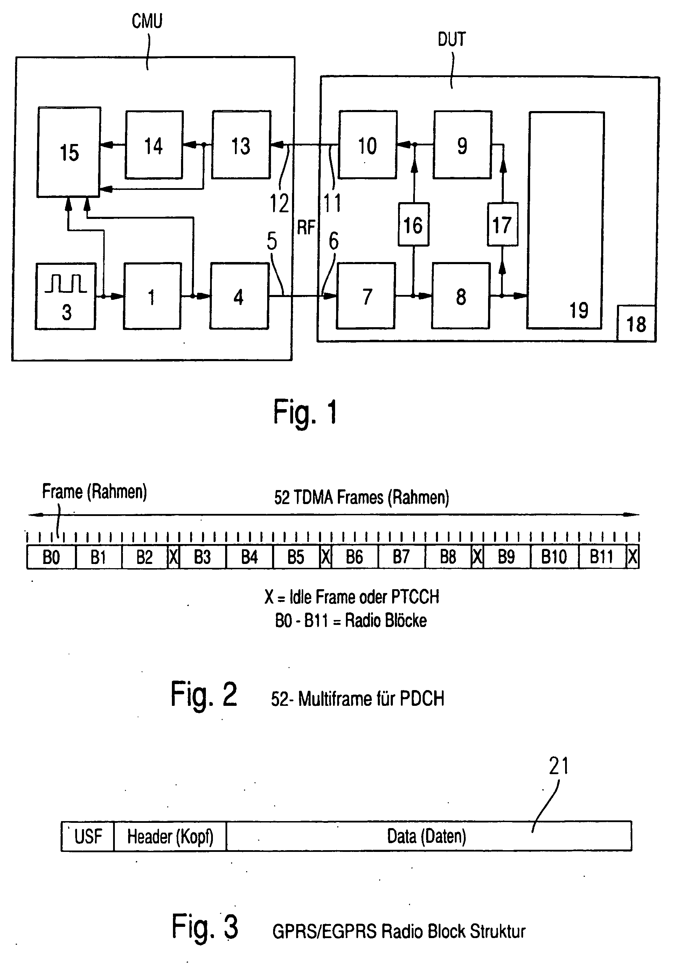

Im Ausführungsbeispiel soll die Bitfehlerrate BER bzw. die Blockfehlerrate BLER eines Mobiltelefons DUT nach GSM-Spezifikation GSM04.14, gemessen werden. In Fig. 1 ist von dem zu messenden Mobiltelefon DUT nur der für das erfindungsgemäße Verfahren erforderliche Teil dargestellt. Gleiches gilt für das für die Messung benutzte Meßgerät CMU. Das Meßgerät umfaßt einen bei Mobiltelefonen üblichen Kanalcodierer 1, mit dem eine sog. Multiframe-Datenstruktur gemäß Fig. 2 erzeugbar ist, die aus zwölf aufeinanderfolgenden Radio-Blöcken B0 bis B11 mit dazwischen liegenden Leerrahmen X und insgesamt 52 TDMA-Rahmen besteht.

Für die Messung wird in dem Zufallsgenerator 3 eine BitFolge erzeugt, im Kanalcodierer 1 gemäß GSM-Spezifikation 05.03 codiert, im Modulator 4 moduliert und in die Hochfrequenzlage umgesetzt.

Das Mobiltelefon DUT wird mit seinem Hochfrequenzeingang 6 (Antenne) unmittelbar beispielsweise über ein Kabel mit diesem Ausgang 5 des Meßgerätes verbunden, im Demodulator 7 demoduliert, und im Kanaldecoder 8 decodiert. Zur Rückübertragung der Daten vom Mobiltelefon DUT zum Meßgerät CMU ist ein Kanalcodierer 9 mit anschließendem Modulator 10 vorgesehen, das so erzeugte modulierte Ausgangssignal des Mobiltelefons wird wieder über Kabel vom Ausgang 11 unmittelbar dem Eingang 12 des Meßgerätes zugeführt, dort im Demodulator 13 demoduliert und im Kanaldecoder 14 decodiert. Die rückübertragenen Bits werden in einem Analysator 15 ausgewertet, wie dies nachfolgend näher erläutert wird. Im Mobiltelefon DUT ist eine erste Verbindungsschleife 16 zwischen Ausgang des Demodulators 7 und Eingang des Modulators 10 vorgesehen und eine zweite Verbindungsschleife 17 zwischen Ausgang des Kanaldecoders 8 und Eingang des Kanalcoders 9. Diese Verbindungsschleifen können über das schematisch angedeutete Testinterface 18 des Mobiltelefons vom Benutzer ein- und ausgeschaltet werden.

Zur Messung der Bitfehlerrate BER wird ohne Aktivierung des RLC/MAC-Protokolls in der Einrichtung 19 des Mobiltelefons DUT, also ohne Signalisierungsaufwand, das im Meßgerät CMU erzeugte Testsignal vom Ausgang 5 dem Eingang 6 zugeführt. In einem ersten Schritt synchronisiert sich das Mobiltelefon DUT in üblicher Weise auf einen normalen Kontrollkanal BCCH und erzielt somit die Synchronisation mit der zugeführten Datenfolge des Testsignals. Nach der Synchronisierung überträgt das Meßgerät die GPRS/EGPRS codierten Radio-Blöcke B0 bis B11 gemäß Fig. 2 zum DUT. Alle Radio-Blöcke sind gemäß dem gleichen Codierschema codiert. Für die Messung der Bitfehlerrate BER wird im DUT über den Benutzer die Verbindungsschleife 17 geschlossen, so daß alle Daten vom Ausgang des Kanaldecoders 8 unmittelbar wieder dem Kanalcoder 9 zugeführt werden und dort mit der gleichen Kanalcodierung codiert zum Eingang 12 des Meßgerätes rückübertragen werden. Auf diese Weise wird Radio-Block für Radio-Block im DUT decodiert und anschließend durch gleiche Codierung wieder zum Meßgerät zurückübertragen. Die zu benutzende Kanalcodierung wird über das Testinterface 18 des Mobiltelefons so eingestellt, daß sie mit der Kanalcodierung des Meßgeräts, die im Kanalcodierer 1 benutzt wird, übereinstimmt.

Im Analysator 15 des Meßgerätes CMU werden die einzelnen Bits vom Ausgang des Kanaldecoders 14 des rückübertragenen Testsignals mit der Bitfolge des Zufallsgenerators 3, also mit der Bitfolge des ursprünlichen Testsignals verglichen und daraus dann die Bitfehlerrate berechnet. Wenn beispielsweise beim Vergleich von insgesamt tausend Bits drei Bits nicht übereinstimmen so wird auf diese Weise eine Bitfehlerrate von 0,3 % berechnet und am Meßgerät CMU entsprechend angezeigt.

Aus den gefundenen Bitfehlern wird auch die Blockfehlerrate (BLER) ermittelt, indem alle RLC-Blöcke, welche mindestens einen Bitfehler enthalten, als Blockfehler gezählt werden.

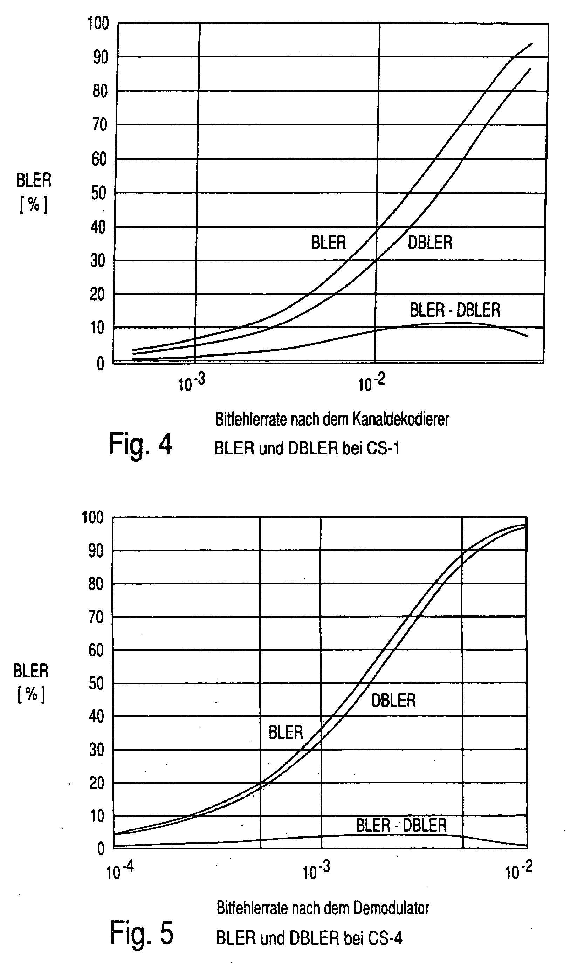

Da beim GSM-Ausführungsbeispiel nur der Datenteil 21 der Radio-Blöcke (Fig. 3) ausgewertet wird und nicht der Header, entspricht der auf diese Weise ermittelte Block-Fehlerratenwert nicht der Blockfehlerrate gemäß GSM-Definition. Der gemäß der Erfindung ermittelte Wert wird deshalb als Datenblockfehlerrate DBLER bezeichnet. Da Fehler im Header oder im USF-Feld des Radio Blockes nicht berücksichtigt werden ist dieser DBLR-Wert stets geringer als der BLER gemäß GSM-Norm. Der Zusammenhang zwischen DBLER und BLER ist jedoch bekannt und ist für zwei Codierverfahren CS-1 und CS-4 in den Figuren 4 und 5 in Abhängigkeit von der Bitfehlerrate grafisch dargestellt. Es ist somit möglich, über die gemäß der Erfindung gemessene DBLER die eigentliche BLER zu bestimmen, indem die ebenfalls in den Figuren 4 und 5 eingezeichnete Differenz zwischen diesen Werten bei der Berechnung entsprechend berücksichtigt wird. Da bei dem Codierverfahren CS-4 der Datenteil des Blockes wesentlich größer ist als der Header ist auch die Differenz zwischen DBLER und BLER nur gering. Bei Codern mit noch höherer Datenrate, z. B. MCS-5 bzw. MCS-9 ist die Differenz noch geringer und praktisch vernachlässigbar.

## Patentansprüche

1. Anordnung zum Messen der Bit-Fehlerrate und/oder Blockfehlerrate eines Mobiltelefons (DUT), das zu Testzwecken einschaltbare Verbindungsschleifen (16, 17) zum unmittelbaren Verbinden des Ausgangs des Demodulators (7) mit dem Eingang des Modulators (10) und/oder des Ausgangs des Kanaldecoders (8) mit dem Eingang des Kanalcodierers (9) aufweist,
mit einem Messgerät (CMU), das einen Generator (3) zum Erzeugen einer Testsignal-Datenbitfolge aufweist, die mittels eines Kanalcodierers (1) entsprechend der Datenübertragungsnorm des zu messenden Mobiltelefons codiert und dann in einem Modulator (4) in eine dem zu messenden Mobiltelefon (DUT) entsprechende Hochfrequenzlage (RF) umgesetzt wird, sowie mit einem Demodulator (13), einem Kanaldecodierer (14) und einem Analysator (15),
wobei zum Messen der Bit-Fehlerrate das Testsignal des Messgerätes (CMU) in das auf die Datenrahmenstruktur des Testsignals synchronisierte Mobiltelefon (DUT) eingespeist, dort demoduliert und decodiert und dann über eine der im Mobiltelefon (DUT) eingeschalteten Verbindungschleifen (16 oder 17) neu codiert und moduliert zum Messgerät (CMU) zurückübertragen und dort nach Demodulation und Decodierung mit dem ursprünglichen Testsignal verglichen wird und daraus schließlich die Bitfehlerrate (BER) berechnet wird,
**dadurch gekennzeichnet,**
**dass**
a) die Verbindungsschleifen (16, 17) des Mobiltelefons (DUT) unmittelbar durch ein am Mobiltelefon vorgesehenes Testinterface (18) ein- und ausschaltbar sind,
b) der Hochfrequenzeingang (6) des Mobiltelefons (DUT) über eine direkte Kopplung mit dem Hochfrequenzausgang (5) des Modulators (4) des Messgerätes (CMU) verbunden wird und so ohne vorhergehende Signalisierung des Mobiltelefons (DUT) das Testsignal in das Mobiltelefon (DUT) eingespeist wird, und
c) der Ausgang des Modulators (10) des Mobiltelefons (DUT) über eine direkte Kopplung mit dem Eingang (12) des Demodulators (13) im Messgerät (CMU) verbunden wird.

2. Anordnung nach Anspruch 1,
**dadurch gekennzeichnet,**
**dass** für ein nach der GSM-Norm arbeitendes Mobiltelefon (DUT) das Testsignal aus einer Datenrahmenstruktur mit GPRS/EGPRS codierten Radio-Blöcken besteht.

3. Anordnung nach einem der vorhergehenden Ansprüche,
**dadurch gekennzeichnet,**
**dass** alle Radio-Blöcke des Testsignals nach dem gleichen Codierschema kanalcodiert sind.

4. Anordnung nach einem der vorhergehenden Ansprüche,
**dadurch gekennzeichnet,**
**dass** die für den Test zwischen Messgerät und Mobiltelefon vereinbarten physikalischen Parameter, insbesondere Trägerfrequenz und Codierschema, über das Testinterface (18) des Mobiltelefons (DUT) in dieses eingegeben werden.

5. Anordnung nach einem der vorhergehenden Ansprüche,
**dadurch gekennzeichnet,**
**dass** beim Vergleich der Testsignale im Messgerät die fehlerhaften Radio-Blöcke gezählt werden und daraus die Blockfehlerrate berechnet wird.

6. Anordnung nach Anspruch 5,
**dadurch gekennzeichnet,**
**dass** beim Vergleich des zurückübertragenen Testsignals mit dem ursprünglichen Testsignal jeweils nur die Datenbits (21) der Radio-Blöcke ohne zugehörigen Header ausgewertet werden.

7. Anordnung nach Anspruch 6,
**dadurch gekennzeichnet,**
**dass** der Zusammenhang zwischen der Blockfehlerrate, die sich für das jeweils genutzte Codierverfahren mit und ohne Berücksichtigung des Headers der Radio-Blöcke ergibt, bei der Berechnung der Blockfehlerrate entsprechend berücksichtigt wird.

## Claims

1. Arrangement for measuring the bit error rate and/or block error rate of a mobile telephone (DUT) which has connection loops (16, 17) which can be switched on for test purposes in order to connect the output of the demodulator (7) directly to the input of the modulator (10) and/or the output of the channel decoder (8) to the input of the channel encoder (9),
having a measuring device (CMU) which has a generator (3) for producing a test signal data bit sequence which is encoded by means of a channel encoder (1) corresponding to the data transmission standard of the mobile telephone to be measured and is then converted in a modulator (4) into a high frequency state (RF) corresponding to the mobile telephone (DUT) to be measured and having a demodulator (13), a channel decoder (14) and an analyser (15)
wherein, in order to measure the bit error rate, the test signal of the measuring device (CMU) is fed into the mobile telephone (DUT) which is synchronised to the data frame structure of the test signal, is demodulated there and decoded and then encoded again and modulated via one of the connection loops (16 or 17) which is switched on in the mobile telephone (DUT), is transmitted back to the measuring device (CMU) and there, after demodulation and decoding, is compared with the original test signal and finally the bit error rate (BER) is calculated therefrom,
**characterised in that**
a) the connection loops (16, 17) of the mobile telephone (DUT) can be switched on and off directly by means of a test interface (18) which is provided on the mobile telephone,
b) the high frequency input (6) of the mobile telephone (DUT) is connected via a direct coupling to the high frequency output (5) of the modulator (4) of the measuring device (CMU) and thus, without preceding signalling of the mobile telephone (DUT), the test signal is fed into the mobile telephone (DUT), and
c) the output of the modulator (10) of the mobile telephone (DUT) is connected via a direct coupling to the input (12) of the demodulator (13) in the measuring device (CMU).

2. Arrangement according to claim 1,
**characterised in that**,
for a mobile telephone (DUT) operating according to the GSM standard, the test signal comprises a data frame structure with GPRS/EGPRS encoded radio blocks.

3. Arrangement according to one of the preceding claims,
**characterised in that**,
all the radio blocks of the test signal are channel coded according to the same encoding scheme.

4. Arrangement according to one of the preceding claims,
**characterised in that**,
physical parameters which are specified for the test between measuring device and mobile telephone, in particular carrier frequency and encoding scheme, are input into the mobile telephone (DUT) via the test interface (18) thereof.

5. Arrangement according to one of the preceding claims,
**characterised in that**,
during comparison of the test signals in the measuring device, the defective radio blocks are counted and the block error rate is calculated therefrom.

6. Arrangement according to claim 5,
**characterised in that,**
during comparison of the transmitted-back test signal with the original test signal respectively, only the data bits (21) of the radio blocks without associated headers are evaluated.

7. Arrangement according to claim 6,
**characterised in that**
the interrelationship between the block error rate, which is produced for the respectively used encoding method with and without taking into account the header of the radio blocks, is taken into account during calculation of the block error rate.

## Revendications

1. Dispositif pour mesurer le taux d'erreur sur les bits et/ou le taux d'erreur sur les blocs, d'un téléphone mobile (DUT) qui comporte aux fins du test des boucles de liaison pouvant être mises en fonction (16, 17) pour connecter de manière directe la sortie du démodulateur (7) avec l'entrée du modulateur (10) et/ou la sortie du décodeur de canal (8) avec l'entrée du codeur de canal (9),
avec un appareil de mesure (CMU), qui comporte un générateur (3) pour générer une suite de bits de données du signal de test, laquelle est codée au moyen d'un codeur de canal (1) conformément à la norme de transmission de données du téléphone mobile à mesurer, pour être ensuite convertie dans une condition fréquence haute (RF) correspondant au téléphone mobile (DUT) à mesurer dans un modulateur (4), ainsi qu'un démodulateur (13), un décodeur de canal (14) et un analyseur (15),
moyennant quoi, afin de mesurer le taux d'erreur sur les bits, le signal de test de l'appareil à mesurer (CMU) est fourni au téléphone mobile (DUT) synchronisé sur la structure de trame de données du signal de test, y est démodulé et décodé, puis est de nouveau codé et démodulé dans les boucles de liaison (16 ou 17) mises en fonction dans le téléphone mobile (DUT) et renvoyé à l'appareil de mesure (CMU) où, une fois démodulé et décodé, il est comparé avec le signal de test initial et, enfin, à partir de cette comparaison le taux d'erreur sur les bits (BER) est calculé,
**caractérisé en ce que**
(a) les boucles de liaison (16, 17) du téléphone mobile (DUT) sont directement mises en fonction et hors fonction par une interface de test (18) prévue dans le téléphone mobile,
(b) l'entrée fréquence haute (6) du téléphone mobile (DUT) est connectée par l'intermédiaire d'un couplage direct avec la sortie fréquence haute (5) du modulateur (4) de l'appareil de mesure (CMU) et, de cette manière, le signal de test est fourni au téléphone mobile DUT sans une signalisation antérieure du téléphone mobile (DUT), et
(c) la sortie du modulateur (10) du téléphone mobile (DUT) est connectée par l'intermédiaire d'un couplage direct avec l'entrée (12) du démodulateur (13) dans l'appareil de mesure (CMU).

2. Dispositif selon la revendication 1,
**caractérisé en ce que**
pour un téléphone mobile (DUT) fonctionnant conformément à la norme GSM, le signal de test est composé d'une structure de trame de données avec des blocs radio codés GPRS/EGPRS.

3. Dispositif selon l'une quelconque des revendications précédentes, **caractérisé en ce que** tous les blocs radio du signal de test sont codés en canal selon le même schéma de codage.

4. Dispositif selon l'une quelconque des revendications précédentes,
**caractérisé en ce que**
les paramètres physiques négociés pour le test entre l'appareil de mesure et le téléphone mobile, en particulier la fréquence de porteuse et le schéma de codage, sont entrés par l'intermédiaire de l'interface de test (18) du téléphone mobile (DUT) dans celui-ci.

5. Dispositif selon l'une quelconque des revendications précédentes,
**caractérisé en ce que**
lors de la comparaison du signal de test dans l'appareil de mesure, les blocs radio défectueux sont comptés et, à partir de là, le taux d'erreur sur les blocs est calculé.

6. Dispositif selon la revendication 5,
**caractérisé en ce que**
lors de la comparaison du signal de test qui a été renvoyé avec le signal de test initial dans l'appareil de mesure, sont exploités respectivement seuls les bits de données (21) des blocs radio sans les en-têtes associés.

7. Dispositif selon la revendication 6,
**caractérisé en ce que**
le rang entre les taux d'erreur sur les blocs, qui résulte en rapport avec le procédé de codage respectivement utilisé et sans prendre en compte l'en-tête des blocs radio, est pris en compte de façon conforme dans le calcul du taux d'erreur sur les blocs.
